# EUROPÄISCHE PATENTSCHRIFT

(11) **EP 3 126 559 B1**
(45) Veröffentlichungstag und Bekanntmachung des Hinweises auf die Patenterteilung: **08.01.2020**
(21) Anmeldenummer: 15712619.4
(22) Anmeldetag: 26.03.2015
(51) Int. Cl.: D06F 39/00, D06F 39/08, D06F 39/10, D06F 39/14

(54) **WASCHMASCHINE MIT ENTFÄRBUNGSRESERVOIR SOWIE VERFAHREN ZUM WASCHEN VON TEXTILIEN IN EINER SOLCHEN WASCHMASCHINE**
WASHING MACHINE WITH A DISCOLOURATION RESERVOIR AND METHOD FOR WASHING TEXTILES IN SUCH A WASHING MACHINE
LAVE-LINGE COMPRENANT UN RÉSERVOIR DE DÉCOLORATION ET PROCÉDÉ DE LAVAGE DE TEXTILES DANS LEDIT LAVE-LINGE

(30) Priorität: 31.03.2014 DE 102014206097
(43) Veröffentlichungstag der Anmeldung: 08.02.2017
(73) Patentinhaber: Henkel AG & Co. KGaA, 40589 Düsseldorf (DE)
(72) Erfinder: SPILL, Iwona, 12357 Berlin (DE); SCHMIEDEL, Peter, 40591 Düsseldorf (DE); KROPF, Christian, 40724 Hilden (DE); HELLMUTH, Hendrik, 40237 Düsseldorf (DE); ROGGE, Bent, 40597 Düsseldorf (DE)
(86) Internationale Anmeldenummer: PCT/EP2015/056576
(87) Internationale Veröffentlichungsnummer: WO 2015/150226

(56) Entgegenhaltungen:
- WO-A2-2009/067838
- DE-A1- 19 546 075
- US-A- 3 269 539
- US-A- 3 927 967

## Beschreibung

Die vorliegende Erfindung betrifft eine Waschmaschine mit einem Entfärbungsreservoir sowie ein Verfahren zum Waschen von Textilien in einer solchen Waschmaschine.

Es ist bekannt, dass bunte Textilien beim Waschvorgang ausfärben können. In Abhängigkeit von der Waschtemperatur, dem gewählten Waschprogramm und dem verwendeten Waschmittel kann es zu einem unterschiedlich stark ausgeprägten Auswaschen einzelner oder mehrerer Farbstoffe aus den Textilien kommen. Die gelösten Farbstoffe gehen in die Waschflüssigkeit, im Allgemeinen eine Waschlauge, über und kommen auf diesem Wege in Kontakt mit anderen Textilien, auf welche die Farbstoffe übergehen können. Dies führt zu unerwünschten Verfärbungen insbesondere heller Textilien und kann im schlimmsten Falle beispielsweise ein Kleidungsstück völlig ruinieren.

In der Textilindustrie werden heute zahlreiche unterschiedliche Farbstoffe eingesetzt. Diese Farbstoffe variieren stark im Hinblick auf ihre chemische Struktur, ihre Eigenschaften und ihre Bindung an ein Textil. So kann beispielsweise unterschieden werden zwischen Direktfarbstoffen, Reaktivfarbstoffen, Dispersionsfarbstoffen, Säurefarbstoffen, Küpenfarbstoffen und anderen. Unterschiedliche Gewebearten, wie Baumwolle, Polyamid oder Polyester, erfordern unterschiedliche Farbstofftypen, um eine effiziente und langanhaltende Einfärbung dieser Gewebe herbeizuführen. Diese große Bandbreite an in der Textilindustrie eingesetzten Farbstoffen stellt eine große Herausforderung dar bei der Suche nach effizienten Maßnahmen gegen das Verfärben.

Zur Unterbindung des Ausfärbeprozesses sind insbesondere im Bereich der Waschmittelzusammensetzungen bereits verschiedene Anstrengungen unternommen worden. So sind heute Farbwaschmittel üblicherweise mit Farbübertragungsinhibitoren versetzt, welche die Übertragung von Farbstoffen auf andere Textilien verhindern sollen. Ein Nachteil dieser Zusatzstoffe besteht darin, dass sie zumeist lediglich gegen einzelne oder wenige Farbstoffe wirksam sind, nicht jedoch gegen ein breiteres Spektrum von Farbstoffen. So zeigen kommerzielle Farbübertragungsinhibitoren beispielsweise eine gute Wirkung gegenüber rotem Direktfarbstoff, jedoch keine bzw. nur geringe Wirkung gegenüber Dispersions-, Säure oder Küpenfarbstoffen. Gerade ein solches breites Farbspektrum liegt jedoch bei einer haushaltsüblichen Buntwäsche vor, da aus Effizienzgründen eine Sortierung nach Farben im Allgemeinen allenfalls grob (hell/dunkel) durchgeführt wird, in aller Regel jedoch nicht nach einzelnen Farbtönen. Um eine entsprechende Wirksamkeit gegenüber einem derartigen Farbstoffgemisch zu erreichen, wäre es notwendig, zahlreiche unterschiedliche Farbübertragungsinhibitoren in die Waschmittelzusammensetzungen aufzunehmen. Dies würde jedoch sowohl die Komplexität von Waschmittelrezepturen als auch die Kosten für das Waschmittel in unerwünschter Weise erhöhen.

Aus der US 3,927,967 ist ein Verfahren zur Fleckbehandlung von Textilien bekannt, bei welchem die Textilien einer Behandlung mit einer Waschmittellösung, einem Photoaktivator und Sauerstoff unterzogen werden und während dieses Behandlungsprozesses mit sichtbarem Licht bestrahlt werden. Ein solches Verfahren ist zur Behandlung von gefärbten Textilien, insbesondere zur Unterbindung des Ausfärbeprozesses, jedoch nicht brauchbar, da durch die Behandlung nicht nur in der Waschflüssigkeit gelöste Farbstoffe, sondern auch die an die Textilien gebundenen Farbstoffe angegriffen werden und die Textilien dadurch in unerwünschter Weise ausbleichen und an Farbe verlieren.

In der WO 2009/067838 A2 ist ein Verfahren zum Reinigen von Wäsche mit elektrolysiertem Wasser mittels oxidativer Radikale beschrieben. Zu diesem Zweck ist zusätzlich zur Waschmaschine ein Wassertank vorgesehen. Das in dem Tank enthaltene Wasser wird durch eine Elektrolyse-Einheit elektrolysiert, wodurch es sich mit oxidativen Radikalen anreichert, die hochreaktiv sind und dadurch unter anderem eine reinigende und desinfizierende Wirkung haben. Das solchermaßen aufbereitete Wasser wird sodann dem eigentlichen Waschprozess zugeführt. Nachteilig ist hier, dass die zu waschenden Textilien während des Waschvorgangs in Kontakt mit dem elektrolysierten Wasser kommen. Dadurch werden nicht nur Verunreinigungen in den Textilien, sondern auch die an die Textilien gebundenen Farbstoffe angegriffen, was zu einem unerwünschten Ausbleichen der Farben führen kann.

Aus der US 3, 269, 539 A ist ein Trockenreinigungsapparat bekannt, bei welchem eine Reinigungsflüssigkeit eingesetzt wird, die aus einer Waschkammer in ein Entfärbungsreservoir eingeleitet wird und dort mit UV-Strahlung derart behandelt wird, dass in der Reinigungsflüssigkeit enthaltene Farbstoffe ausgeblichen werden. Die solchermaßen behandelte Reinigungsflüssigkeit wird sodann wieder in die Waschkammer eingeleitet.

Aufgabe der vorliegenden Erfindung ist daher die Bereitstellung von alternativen, einfachen und kostengünstigen Maßnahmen, durch welche das Risiko von Verfärbungen während des Waschvorgangs in einer Waschmaschine bei gleichzeitiger Schonung der zu waschenden Textilien minimiert wird.

Diese Aufgabe wird gelöst durch eine Waschmaschine gemäß Patentanspruch 1 sowie durch ein Verfahren gemäß Patentanspruch 12.

Vorteilhafte Ausgestaltungen und Weiterbildungen der Erfindung sind Gegenstand der Unteransprüche.

Gemäß Patentanspruch 1 handelt es sich bei der Erfindung um eine Waschmaschine mit einer Waschkammer zur Aufnahme von einer Waschflüssigkeit und von zu reinigenden Textilien und mit einem Entfärbungsreservoir, das über einen Einlass zum Einleiten von Waschflüssigkeit aus der Waschkammer in das Entfärbungsreservoir und über einen Auslass zum Herausleiten von Waschflüssigkeit aus dem Entfärbungsreservoir in die Waschkammer verfügt, wobei sowohl der Einlass als auch der Auslass derart beschaffen sind, dass Textilien nicht in das Entfärbungsreservoir gelangen können, und welches darüber hinaus mindestens ein Aktivierungsmittel aufweist, das geeignet ist, innerhalb des Entfärbungsreservoirs einen Prozess zur Bildung freier Radikale in der Waschflüssigkeit in Gang zu setzen, wobei in der Waschflüssigkeit enthaltene Farbstoffe durch die freien Radikale zersetzbar sind, und wobei weiterhin das Aktivierungsmittel eine Elektrodenanordnung, umfassend eine Anode und eine Kathode, aufweist.

Es kann sich bei der Waschmaschine im Sinne der Erfindung grundsätzlich um eine haushaltsübliche, quaderförmige Waschmaschine mit einem Fassungsvermögen von etwa 4 bis 9 kg Wäsche handeln. Es fallen aber auch andere Waschmaschinentypen, beispielsweise industrielle Waschmaschinen mit abweichender Bauweise und deutlich größerem Fassungsvermögen unter die Erfindung. Bei der Waschkammer handelt es sich um denjenigen Raum, weicher während eines Waschganges von Waschflüssigkeit durchströmt wird. Bei einer haushaltsüblichen Waschmaschine ist dies im Allgemeinen eine Waschtrommel sowie der diese unmittelbar umgebende Raum.

Es hat sich gezeigt, dass die während eines Waschvorgangs in die Waschflüssigkeit übergegangenen Farbstoffe durch freie Radikale zersetzt werden können. Freie Radikale besitzen mindestens ein ungepaartes Elektron und sind aus diesem Grund äußerst reaktionsfreudig und dadurch kurzlebig (in der Regel < 1s). Sie sind in der Lage, mit den in der Waschflüssigkeit gelösten Farbstoffen zu reagieren und diese so zu zersetzen. Beispielhaft sei die Zersetzung des Farbstoffes Acid Orange 7 genannt, welcher durch die Wechselwirkung mit freien Radikalen in farblose aromatische Nebenprodukte zersetzt wird, die ihrerseits durch Oxidation in aliphatische Säuren überführt werden.

Dieses Wechselwirkungsverhalten zwischen freien Radikalen und Farbstoffen macht sich die erfindungsgemäße Waschmaschine zu Nutze. Sie weist zu diesem Zweck das Entfärbungsreservoir auf, in welches die mit gelösten Farbstoffen angereicherte Waschflüssigkeit aus der Wachkammer einleitbar ist. In dem Entfärbungsreservoir ist das eine Elektrodenanordnung aufweisende Aktivierungsmittel angeordnet, das geeignet ist, einen Prozess zur Bildung freier Radikale in der Waschflüssigkeit innerhalb des Entfärbungsreservoirs in Gang zu setzen. Die gebildeten freien Radikale greifen die Farbstoffe in der Waschflüssigkeit an und zersetzen diese. Die auf diese Weise behandelte Waschflüssigkeit wird sodann wieder aus dem Entfärbungsreservoir heraus- und in die Waschkammer eingeleitet und dem weiteren Waschprozess in der Waschmaschine zugeführt. Der Anteil an gelösten Farbstoffen in der insgesamt in der Waschkammer befindlichen Waschflüssigkeit wird somit deutlich reduziert und dadurch das Risiko von Textilverfärbungen minimiert.

Als besonders vorteilhaft zeigt sich die hervorragende Wirkung der freien Radikale gegenüber verschiedensten Farbstoffen. Dadurch kann auf jeweils nur gegenüber einzelnen Farbstoffen wirksame Waschmittelzusätze weitgehend verzichtet werden und auch ein strenges Sortieren der zu waschenden Textilien nach unterschiedlichen Farbtönen vor der Wasche kann entfallen.

Die erfindungsgemäße Waschmaschine weist den Vorteil auf, dass innerhalb des Entfärbungsreservoirs ausschließlich die Behandlung der Waschflüssigkeit erfolgt, ein unerwünschter Einfluss der reaktiven freien Radikale auf die in der Waschkammer, im allgemeinen in einer Waschtrommel, befindlichen Textilien und die in diesen gebundenen Farbstoffe ist nicht möglich bzw. weitestgehend ausgeschlossen. Sowohl der Einlass zum Einleiten der Waschflüssigkeit aus der Waschkammer in das Entfärbungsreservoir als auch der Auslass zum Herausleiten der Waschflüssigkeit in die Waschkammer sind zu diesem Zwecke derart beschaffen, dass Textilien nicht in das Entfärbungsreservoir gelangen können. Hierzu können der Einlass und/oder der Auslass des Entfärbungsreservoirs beispielsweise mit geeigneten Filtern oder Gittern ausgestattet sein, welche nicht für Textilien, wohl aber für die Waschflüssigkeit passierbar sind. Auch können die Abmessungen, insbesondere die Querschnittsfläche des Einlasses und/oder des Auslasses so bemessen sein, dass ein Eintreten von Textilien in das Entfärbungsreservoir nicht möglich ist.

Die Länge des Einlasses und insbesondere des Auslasses der Entfärbungseinheit ist dabei derart bemessen, dass unter Berücksichtigung der mittleren Fließgeschwindigkeit der Waschflüssigkeit durch das Entfärbungsreservoir und der mittleren Lebensdauer der freien Radikale davon ausgegangen werden kann, dass in der behandelten Waschflüssigkeit beim Austreten aus dem Entfärbungsreservoir praktisch keine freien Radikale mehr vorhanden sind.

Bei der Waschflüssigkeit handelt es sich im Allgemeinen um eine Waschlauge, bei welcher Waschmittel in Wasser gelöst ist. Je nach Anforderung können dieser Waschlauge weitere Komponenten zugemischt sein. In bestimmten Anwendungsfällen können auch reines Wasser oder andere geeignete Flüssigkeiten zur Anwendung kommen.

Bei der erfindungsgemäßen Waschmaschine weist das Aktivierungsmittel eine Elektrodenanordnung auf, umfassend eine Anode und eine Kathode. Die Bildung der freien Radikale in der Waschflüssigkeit erfolgt somit vermittels eines elektrochemischen Prozesses. Hierzu werden die Anode und die Kathode in das Entfärbungsreservoir eingebracht und jeweils mit dem positiven bzw. negativen Pol einer Gleichspannungsquelle verbunden. Bei der sodann einsetzenden Elektrolyse wird das in der Waschflüssigkeit enthaltene Wasser unter Bildung von OH-Radikalen gespalten. Die auf diese Weise entstandenen Hydroxyl-Radikale sind in der Lage, die in der Waschflüssigkeit gelösten Farbstoffe zu oxidieren und damit unschädlich zu machen.

Besonders bevorzugt wird als Anode eine bordotierte Diamantelektrode eingesetzt. Hierbei handelt es sich in der Regel um einen Grundkörper aus Kunststoff, Metall oder einem Halbleiter, beispielsweise Silizium, der mit einer dünnen, polykristallinen Diamantschicht überzogen ist. Um eine ausreichende Leitfähigkeit für die Elektrolyse zu erreichen, wird die Diamantschicht während der Herstellung mit Bor dotiert.

Die wirksame Flache der Anode beträgt vorzugsweise zwischen 1 und 500 cm2, besonders bevorzugt zwischen 2 und 100 cm2. Die Elektrolyse wird bei Stromstärken im Bereich von 0,01 bis 30 A, bevorzugt 0,1 bis 10 A durchgeführt.

Bei einer bevorzugten Ausgestaltung der Erfindung umfasst das Aktivierungsmittel zusätzlich zu der Elektrodenanordnung eine UV-Strahlungsquelle, d.h. der Prozess zur Bildung freier Radikale in dem Entfärbungsreservoir wird zusätzlich durch UV-Bestrahlung in Gang gesetzt. Als Waschflüssigkeit wird bei dieser Ausführungsvariante eine Waschlauge eingesetzt, welche chemische Zusatzkomponenten wie Wasserstoffperoxid (H₂O₂) oder Titandioxid (TiO₂) enthält. Durch die von der Strahlungsquelle in dem Entfärbungsreservoir emittierte UV-Strahlung wird das in der Waschlauge enthaltene Wasserstoffperoxid bzw. Titandioxid aktiviert und als kurzlebige Produkte dieser Reaktion entstehen hoch reaktive Hydroxyl-Radikale (OH-Radikale), welche in der Lage sind, die Farbstoffe in der Waschlauge zu zersetzen. Neben dem genannten Wasserstoffperoxid und Titandioxid sind selbstverständlich auch zahlreiche weitere chemische Zusätze geeignet, welche sich durch UV-Bestrahlung unter Bildung freier Radikale aktivieren lassen. Die Verwendung von Wasserstoffperoxid bietet sich in besonderer Weise an, da dieses als Bleichmittel bereits in zahlreichen Waschmittelkompositionen enthalten ist.

Die Konzentration von Wasserstoffperoxid in der Waschflüssigkeit beträgt vorzugsweise 0,1 bis 50 mmol/L, besonders bevorzugt 1 bis 20 mmol/L.

Aufgrund der isolierten Behandlung der Waschlauge in dem Entfärbungsreservoir, welches lediglich für die Waschlauge, nicht jedoch für Textilien zugänglich ist, und aufgrund der Kurzlebigkeit der freien Radikale, ist eine direkte Einwirkung der UV-Strahlung und/oder der freien Radikale auf die Textilien und eine etwaige Schädigung dieser, beispielsweise eine Entfärbung, nicht möglich.

Als UV-Strahlungsquelle können eine Quarz-Lampe oder eine UV-Leuchtdiode eingesetzt werden. Jedoch sind auch andere UV-Strahlungsquellen wie Gasentladungslampen, Fluoreszenzlampen oder Laser denkbar.

Es wird allgemein bevorzugt, dass wenn eine UV-Strahlungsquelle als Aktivierungsmittel vorhanden ist, dass diese Quelle in den Entfärbungsreservoir so platziert ist und/oder dass der Entfärbungsreservoir so ausgestaltet ist, dass die Waschkammer keine direkte UV-Strahlung abbekommt, weiter bevorzugt keine UV-Strahlung abbekommt, so dass Farbstoffe in den Textilien die in der Waschkammer vorhanden sein können nicht beschädigt werden. Dies kann z.B. erfolgen indem beim Eingang und Ausgang in Richtung Waschkammer eine Blende oder eine Kurve vorhanden ist, und die Waschflüssigkeit um die Blende herum bzw. um die Kurve fließen muss. Z.B. können auch die Ein und Ausgänge des Entfärbungsreservoir in einer Richtung angeordnet damit diese nicht Richtung Waschkammer zeigen.

Der bevorzugte Wellenlängenbereich der emittierten UV-Strahlung liegt zwischen 100 und 400 nm, besonders bevorzugt zwischen 250 und 400 nm. Erste Versuche deuten darauf hin, dass eine Abhängigkeit besteht zwischen der Wellenlänge der emittierten Strahlung und der Art des zersetzbaren Farbstoffes.

Die Elektrodenanordnung als Aktivierungsmittel liefert für sich bereits gute Ergebnisse in der Reduzierung von Farbstoffen in der Waschflüssigkeit. Gleichwohl ist es erfindungsgemäß, wie oben beschrieben, auch möglich, die beiden Varianten zu kombinieren, um eine noch bessere Entfärbung der Waschflüssigkeit zu erreichen. Dabei können sowohl die UV-Strahlungsquelle als auch die Elektrodenanordnung in einem gemeinsamen Entfärbungsreservoir angeordnet sein.

Gemäß einer weiteren Ausgestaltung der erfindungsgemäßen Waschmaschine ist mindestens eine Pumpe vorgesehen, welche die Waschflüssigkeit aus der Waschkammer in das Entfärbungsreservoir hinein und/oder aus diesem herauspumpt. Hierdurch kann der Entfärbungsprozess noch effizienter gestaltet werden.

Das Einsetzen, die Intensität und die Dauer des Prozesses zur Bildung freier Radikale in dem Entfärbungsreservoir sind vorzugsweise regelbar. So kann das Einsetzen des Prozesses an das Erreichen bestimmter Betriebsparameter gekoppelt sein, beispielsweise an eine bestimmte Temperatur der Waschflüssigkeit oder an eine bestimmte Phase des Waschgangs. Für eine temperaturabhängige Regelung kann beispielsweise ein Temperatursensor vorgesehen sein, durch welchen die Temperatur der Waschflüssigkeit erfassbar ist. Auch kann eine rein zeitliche Regelung vorgesehen sein, bei der der Prozess zu einem voreinstellbaren Zeitpunkt startet. Ebenso kann die Dauer des Prozesses so eingestellt werden, dass dieser stoppt, sobald ein gewisses Maß an Farbstoffen innerhalb der Waschflüssigkeit unterschritten wird. Bei Waschgängen mit besonders niedriger Temperatur, bei welchen kein Auswaschen von Farbstoffen in die Waschflüssigkeit zu befürchten ist, kann das Einsetzen des Prozesses auch völlig unterbunden werden. Bei hohen Waschtemperaturen und beim Waschen besonders stark ausfärbender Textilien hingegen können die Intensität und Dauer des Prozesses entsprechend gesteigert werden.

Die Temperatur der Waschflüssigkeit, bei der die erfindungsgemäße Waschmaschine betrieben werden kann, kann zwischen 10 und 100 °C, vorzugsweise zwischen 20 und 60 °C liegen.

Das Entfärbungsreservoir kann gemäß einer Ausgestaltung der Erfindung in einem Gehäuse der Waschmaschine fest eingebaut sein. Hierbei kann die Spannungsversorgung für die Aktivierungsmittel und gegebenenfalls für die Pumpe an die Spannungsversorgung der Waschmaschine gekoppelt sein. Das Entfärbungsreservoir kann beispielsweise unterhalb der Trommel oder auf der Innenseite der Tür der Waschmaschine angebracht sein. Zur Zuleitung der Waschflüssigkeit in das Entfärbungsreservoir und wieder aus diesem heraus können in der Waschmaschine entsprechende Leitungen vorgesehen sein, welche an den Einlass bzw. den Auslass des Entfärbungsreservoirs anschließbar sind. So kann beispielsweise die Waschkammer über einen Waschflüssigkeitsauslass verfügen, welcher mit dem Einlass des Entfärbungsreservoirs verbindbar ist. Entsprechend kann der Auslass des Entfärbungsreservoirs mit einem Waschflüssigkeltseinlass der Waschkammer verbindbar sein, so dass die behandelte Waschflüssigkeit aus dem Entfärbungsreservoir wieder zurück in die Waschkammer geführt werden kann.

Alternativ kann das Entfärbungsreservoir auch als separates, vorzugsweise batteriebetriebenes Modul ausgebildet sein. Dieses kann beispielsweise mit Hilfe einer entsprechenden Halterung an der Innenseite der Tür der Waschmaschine angebracht werden. Der Vorteil eines separat einbringbaren Moduls besteht darin, dass dieses nur bei Bedarf eingesetzt werden kann und somit einem geringeren Verschleiß unterliegt. Zudem kann ein separates Modul auch nachträglich noch in eine bereits vorhandene Waschmaschine eingebaut werden oder aus einer defekten Waschmaschine aus und in eine neue Waschmaschine eingebaut werden.

Die Erfindung offenbart somit auch ein in eine Waschmaschine einsetzbares Modul, welches ein Entfärbungsreservoir mit einem Einlass zum Einleiten von Waschflüssigkeit in das Entfärbungsreservoir und einem Auslass zum Herausleiten von Waschflüssigkeit aus dem Entfärbungsreservoir aufweist, und welches mindestens ein Aktivierungsmittel aufweist, das geeignet ist, innerhalb des Entfärbungsreservoirs einen Prozess zur Bildung freier Radikale in der Waschflüssigkeit in Gang zu setzen.

Gemäß Patentanspruch 12 betrifft die Erfindung auch ein Verfahren zum Waschen von Textilien in einer Waschmaschine unter Verwendung einer Waschmaschine nach einem der Ansprüche 1 bis 11, umfassend die Schritte:
- Einfüllen der zu waschenden Textilien in die Waschkammer der Waschmaschine;
- Starten eines Waschganges;
- Einleiten von Waschflüssigkeit aus der Waschkammer in das Entfärbungsreservoir;
- In Gang setzen eines Prozesses zur Bildung freier Radikale in der Waschflüssigkeit in dem Entfärbungsreservoir;
- Zersetzung von in der Waschflüssigkeit enthaltenen Farbstoffen durch die freien Radikale;
- Herausleiten von behandelter Waschflüssigkeit aus dem Entfärbungsreservoir in die Waschkammer.

Im Folgenden wird die Erfindung anhand von Ausführungsbeispielen und unter Bezugnahme auf die beigefügten Zeichnungen näher erläutert. Es zeigen:
- Figur 1:: ein aus dem Stand der Technik bekanntes Entfärbungsreservoirs in schematischer Darstellung;
- Figur 2:: ein Ausführungsbeispiel des erfindungsgemäßen Entfärbungsreservoirs in schematischer Darstellung;
- Figur 3:: eine schematische Ansicht einer Waschmaschine mit dem Entfärbungsreservoir aus Figur 2 gemäß der Erfindung;
- Figur 4:: eine schematische Ansicht einer alternativen Ausgestaltung der Waschmaschine mit dem Entfärbungsreservoir aus Figur 2 gemäß der Erfindung.

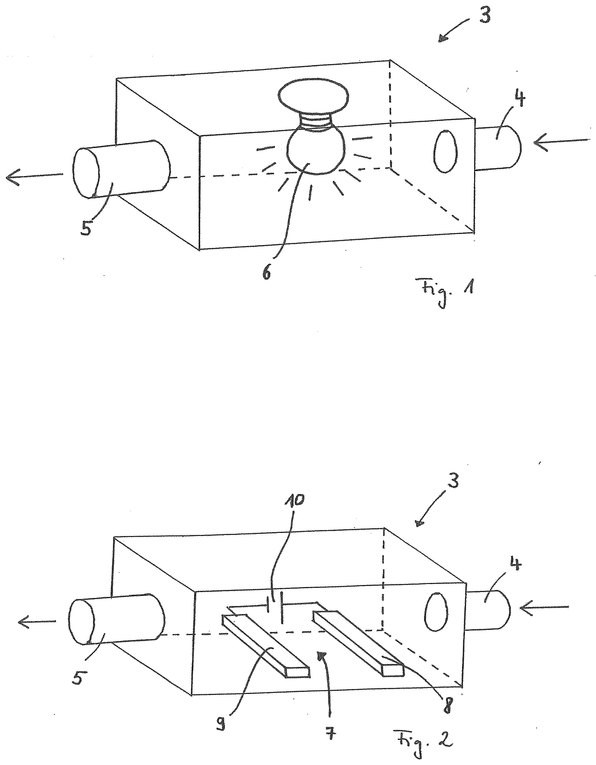

Anhand der Figuren 1 und 2 wird zunächst die Funktionsweise des Entfärbungsreservoirs näher erläutert.

Figur 1 zeigt schematisch ein aus dem Stand der Technik bekanntes und im Ganzen mit 3 bezeichnetes Entfärbungsreservoir, welches geeignet ist, Waschflüssigkeit aufzunehmen. Hierzu weist das Entfärbungsreservoir 3 einen Einlass 4 sowie einen Auslass 5 auf. Durch den Einlass 4 kann nicht dargestellte Waschflüssigkeit aus der Umgebung des Entfärbungsreservoirs 3 in dessen Innenraum gelangen. Über den Auslass 5 kann die Waschflüssigkeit wieder aus dem Entfärbungsreservoir 3 austreten. Die Flussrichtung der Waschflüssigkeit ist schematisch über Pfeile angedeutet.

Innerhalb des Entfärbungsreservoirs 3 ist eine UV-Strahlungsquelle 6 angeordnet. Die Anordnung der UV-Strahlungsquelle 6 innerhalb des Entfärbungsreservoirs 3 ist in Figur 1 lediglich schematisch dargestellt, insbesondere wurde auf die Darstellung der elektrischen Anschlüsse der UV-Strahlungsquelle 6 verzichtet. Bei der UV-Strahlungsquelle 6 kann es sich um eine UV-Quarz-Lampe handeln, welche UV-Strahlung mit einer Wellenlänge von 254 nm emittiert.

Wird nun eine Wasserstoffperoxid (H₂O₂) enthaltende Waschflüssigkeit, in welcher Farbstoffe gelöst sind, durch den Einlass 4 in das Entfärbungsreservoir 3 eingeleitet, so werden H₂O₂-Moleküle durch die von der Quarz-Lampe emittierte UV-Strahlung aktiviert und es entstehen kurzlebige, hochreaktive Hydroxyl-Radikale (OH). Diese OH-Radikale greifen die in der Waschflüssigkeit gelösten Farbstoffe an und zersetzen diese. Die auf diese Weise entfärbte Waschflüssigkeit wird schließlich durch den Auslass 5 aus dem Entfärbungsreservoir 3 wieder herausgeleitet.

Die Bezeichnung "entfärbte Waschflüssigkeit" soll bedeuten, dass der Farbstoffgehalt der Waschflüssigkeit bei Verlassen des Entfärbungsreservoirs 3 deutlich geringer ist als beim Eintreten in das Entfärbungsreservoir 3. Der absolute Grad der Entfärbung hängt von unterschiedlichen Parametern wie ursprünglichem Farbstoffgehalt in der Waschflüssigkeit, Verweildauer der Waschflüssigkeit in dem Entfärbungsreservoir 3, Strahlungsintensität der UV-Lampe und anderen ab.

In Figur 2 ist ein Ausführungsbeispiel des erfindungsgemäßen Entfärbungsreservoirs 3 dargestellt. Gleiche Bauteile sind mit gleichen Bezugszeichen gekennzeichnet und werden zur Vermeidung von Wiederholungen nicht mehr separat erläutert. Innerhalb des in Figur 2 dargestellten Entfärbungsreservoirs 3 befindet sich eine Elektrodenanordnung 7, welche aus einer Anode 8 und einer Kathode 9 besteht. Die Anode 8 ist mit dem positiven Pol einer elektrischen Gleichspannungsquelle 10 verbunden, die Kathode 9 mit dem negativen Pol. Auch hier erfolgt die Darstellung der Elektrodenanordnung lediglich schematisch. Die Anode 8 kann eine bordotierte Diamantanode, die Kathode 9 eine Edelstahlelektrode sein. Die Gleichspannungsquelle 10 liefert eine Spannung von beispielsweise 2,4 Volt.

Tritt nun mit Farbstoffen angereicherte Waschflüssigkeit über den Einlass 4 in das Entfärbungsreservoir 3 ein, so kommt es zur elektrolytischen Spaltung des in der Waschflüssigkeit enthaltenen Wassers. Hierbei entstehen Hydroxyl-Radikale, welche in gleicher Weise wie bereits für das in Figur 1 dargestellte Ausführungsbeispiel erläutert mit den in der Waschflüssigkeit enthaltenen Farbstoffen wechselwirken und diese zersetzen. Die entfärbte Waschflüssigkeit wird schließlich wieder über den Auslass 5 aus dem Entfärbungsreservoir 3 herausgeleitet.

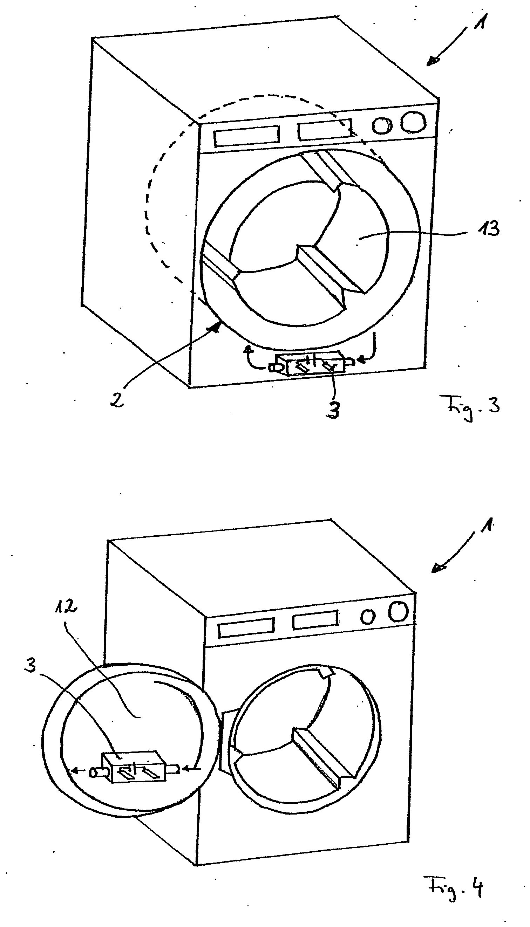

Die Figuren 3 und 4 zeigen jeweils eine Waschmaschine mit einem Entfärbungsreservoir gemäß der Erfindung.

Die in Figur 3 in vereinfachter Form dargestellte Waschmaschine 1 weist eine Trommel 13 auf, welche Teil einer Waschkammer 2 ist und unterhalb derer das eine Elektrodenanordnung enthaltende Entfärbungsreservoir 3 gemäß Figur 2 angeordnet ist. Die Waschkammer 2 besteht aus der Waschtrommel 13 und dem diese unmittelbar umgebenden Raum, welcher während des Waschganges von der Waschflüssigkeit durchströmt wird. Der Flüssigkeitsfluss durch das Entfärbungsreservoir 3 ist durch Pfeile angedeutet. Das Entfärbungsreservoir 3 ist in dem gezeigten Beispiel integraler Bestandteil der Waschmaschine 1.

Alternativ kann das Entfärbungsreservoir 3 auch, wie in Figur 4 gezeigt, im Bereich einer Tür 12 der Waschmaschine 1 angeordnet sein. In Figur 4 ist das Entfärbungsreservoir 3 auf der Innenseite der Tür 12 der Waschmaschine 1 montiert. Das Entfärbungsreservoir 3 weist die Elektrodenanordnung 7 auf. Das Entfärbungsreservoir 3 ist in diesem Beispiel als separates, batteriebetriebenes Modul in die Waschmaschine 1 eingebracht und kann bei Bedarf abgenommen werden.

Die erfindungsgemäße, ein Entfärbungsreservoir 3 aufweisende Waschmaschine 1 sowie das mit dieser betriebene Verfahren zum Waschen von Textilien stellen somit Maßnahmen dar, mit Hilfe derer das Risiko von Verfärbungen während des Waschprozesses in einer Waschmaschine minimiert werden kann. Insbesondere zeichnet sich die Erfindung dadurch aus, dass auf einfache Weise verschiedenste Farbstoffe gleichzeitig zersetzt werden können, ohne dass die Textilien selbst durch den Farbneutralisierungsprozess in Mitleidenschaft gezogen würden. Als Folge dieses verminderten Verfärbungsrisikos kann auf das Vorsortieren von Textilien nach Farben vor der Wäsche weitgehend verzichtet werden, was eine deutliche Zeitersparnis bedeutet.

## Patentansprüche

1. Waschmaschine (1) mit einer Waschkammer (2) zur Aufnahme von einer Waschflüssigkeit und von zu reinigenden Textilien und mit einem Entfärbungsreservoir (3), das über einen Einlass (4) zum Einleiten von Waschflüssigkeit aus der Waschkammer (2) in das Entfärbungsreservoir (3) und über einen Auslass (5) zum Herausleiten von Waschflüssigkeit aus dem Entfärbungsreservoir (3) in die Waschkammer (2) verfügt, wobei sowohl der Einlass (4) als auch der Auslass (5) derart beschaffen sind, dass Textilien nicht in das Entfärbungsreservoir (3) gelangen können, **dadurch gekennzeichnet, dass** das Entfärbungsreservoir darüber hinaus mindestens ein Aktivierungsmittel aufweist, das geeignet ist, innerhalb des Entfärbungsreservoirs (3) einen Prozess zur Bildung freier Radikale in der Waschflüssigkeit in Gang zu setzen, wobei in der Waschflüssigkeit enthaltene Farbstoffe durch die freien Radikale zersetzbar sind, und wobei das Aktivierungsmittel eine Elektrodenanordnung (7), umfassend eine Anode (8) und eine Kathode (9), aufweist.

2. Waschmaschine (1) nach Anspruch 1, **dadurch gekennzeichnet, dass** die Anode (8) eine bordotierte Diamantelektrode ist.

3. Waschmaschine (1) nach Anspruch 1 oder 2, **dadurch gekennzeichnet, dass** die wirksame Fläche der Anode (8) zwischen 1 und 500 cm², bevorzugt zwischen 2 und 100 cm² beträgt

4. Waschmaschine (1) nach Anspruch 1, **dadurch gekennzeichnet, dass** das Aktivierungsmittel zusätzlich eine UV-Strahlungsquelle (6) umfasst.

5. Waschmaschine (1) nach Anspruch 4, **dadurch gekennzeichnet, dass** als UV-Strahlungsquelle (6) eine Quarzlampe oder eine UV-Leuchtdiode zum Einsatz kommt.

6. Waschmaschine (1) nach Anspruch 4 oder 5, **dadurch gekennzeichnet, dass** die UV-Strahlungsquelle (6) UV-Strahlung in einem Wellenlängenbereich von 100 bis 400 nm, bevorzugt von 250 bis 400 nm, emittiert.

7. Waschmaschine (1) nach einem der Ansprüche 1 bis 6, **dadurch gekennzeichnet, dass** mindestens eine Pumpe vorgesehen ist, welche die Waschflüssigkeit aus der Waschkammer (2) in das Entfärbungsreservoir (3) hinein und/oder aus diesem heraus pumpt.

8. Waschmaschine (1) nach einem der Ansprüche 1 bis 7, **dadurch gekennzeichnet, dass** die Dauer des Prozesses zur Bildung freier Radikale einstellbar ist.

9. Waschmaschine (1) nach Anspruch 8, **dadurch gekennzeichnet, dass** ein Temperatursensor vorgesehen ist, durch welchen die Temperatur der Waschflüssigkeit erfassbar ist, und dass das Einsetzen des Prozesses zur Bildung freier Radikale an das Erreichen einer bestimmten Temperatur der Waschflüssigkeit gekoppelt ist.

10. Waschmaschine (1) nach einem der Ansprüche 1 bis 9, **dadurch gekennzeichnet, dass** das Entfärbungsreservoir (3) in einem Gehäuse der Waschmaschine (1) fest eingebaut ist.

11. Waschmaschine (1) nach einem der Ansprüche 1 bis 9, **dadurch gekennzeichnet, dass** das Entfärbungsreservoir (3) als separates, vorzugsweise batteriebetriebenes Modul ausgebildet ist.

12. Verfahren zum Waschen von Textilien in einer Waschmaschine unter Verwendung einer Waschmaschine nach einem der Ansprüche 1 bis 11, umfassend die Schritte:
- Einfüllen der zu waschenden Textilien in die Waschkammer (2) der Waschmaschine (1);
- Starten eines Waschganges;
- Einleiten von Waschflüssigkeit aus der Waschkammer (2) in das Entfärbungsreservoir (3);
- In Gang setzen eines Prozesses zur Bildung freier Radikale in der Waschflüssigkeit in dem Entfärbungsreservoir (3);
- Zersetzung von in der Waschflüssigkeit enthaltenen Farbstoffen durch die freien Radikale;
- Herausleiten von behandelter Waschflüssigkeit aus dem Entfärbungsreservoir (3) in die Waschkammer (2).

13. Verfahren nach Anspruch 12, **dadurch gekennzeichnet, dass** die Waschflüssigkeit eine Temperatur von 10 bis 100 °C, bevorzugt von 20 bis 60 °C aufweist.

## Claims

1. A washing machine (1), comprising a washing chamber (2) for receiving a washing liquid and textiles to be cleaned, and comprising a discoloration reservoir (3) which has an inlet (4) for conveying washing liquid out of the washing chamber (2) into the discoloration reservoir (3) and has an outlet (5) for conveying washing liquid out of the discoloration reservoir (3) into the washing chamber (2), both the inlet (4) and the outlet (5) being designed in such a way that textiles cannot enter the discoloration reservoir (3), **characterized in that** the discoloration reservoir further has at least one activation means which is suitable for initiating a process within the discoloration reservoir (3) for forming free radicals in the washing liquid, it being possible for dyes contained in the washing liquid to be decomposed by the free radicals, and the activation means having an electrode arrangement (7) comprising an anode (8) and a cathode (9).

2. The washing machine (1) according to claim 1, **characterized in that** the anode (8) is a boron-doped diamond electrode.

3. The washing machine (1) according to claim 1 or 2, **characterized in that** the active surface area of the anode (8) is between 1 and 500 cm², preferably between 2 and 100 cm².

4. The washing machine (1) according to claim 1, **characterized in that** the activation means also comprises a UV radiation source (6).

5. The washing machine (1) according to claim 4, **characterized in that** a quartz lamp or a UV light-emitting diode is used as the UV radiation source (6).

6. The washing machine (1) according to claim 4 or 5, **characterized in that** the UV radiation source (6) emits UV radiation in a wavelength range of from 100 to 400 nm, preferably from 250 to 400 nm.

7. The washing machine (1) according to one of claims 1 to 6, **characterized in that** at least one pump is provided which pumps the washing liquid from the washing chamber (2) into the discoloration reservoir (3) and/or out of said reservoir.

8. The washing machine (1) according to one of claims 1 to 7, **characterized in that** the duration of the process for forming free radicals can be adjusted.

9. The washing machine (1) according to claim 8, **characterized in that** a temperature sensor is provided by means of which the temperature of the washing liquid can be detected, and **in that** the beginning of the process for forming free radicals is associated with reaching a certain temperature of the washing liquid.

10. The washing machine (1) according to one of claims 1 to 9, **characterized in that** the discoloration reservoir (3) is permanently installed in a housing of the washing machine (1).

11. The washing machine (1) according to one of claims 1 to 9, **characterized in that** the discoloration reservoir (3) is designed as a separate, preferably battery-operated, module.

12. A method for washing textiles in a washing machine using a washing machine according to one of claims 1 to 11, comprising the steps of:
- placing the textiles to be washed into the washing chamber (2) of the washing machine (1);
- starting a washing cycle;
- conveying washing liquid from the washing chamber (2) into the discoloration reservoir (3);
- initiating a process for forming free radicals in the washing liquid in the discoloration reservoir (3);
- decomposing dyes contained in the washing liquid by means of the free radicals;
- conveying treated washing liquid out of the discoloration reservoir (3) into the washing chamber (2).

13. The method according to claim 12, **characterized in that** the washing liquid has a temperature of from 10 to 100 °C, preferably from 20 to 60 °C.

## Revendications

1. Machine à laver (1) comprenant une chambre de lavage (2) destinée à recevoir un liquide de lavage et des textiles à nettoyer, et comprenant un réservoir de décoloration (3) qui dispose d'une entrée (4) destinée à l'introduction du liquide de lavage provenant de la chambre de lavage (2) dans le réservoir de décoloration (3), et d'une sortie (5) destinée à acheminer le liquide de lavage du réservoir de décoloration (3) vers la chambre de lavage (2), l'entrée (4) ainsi que la sortie (5) étant conçues de telle manière que des textiles ne peuvent pas pénétrer dans le réservoir de décoloration (3), **caractérisée en ce que** le réservoir de décoloration comporte en outre au moins un moyen d'activation adapté pour mettre en œuvre un processus de formation de radicaux libres dans le liquide de lavage à l'intérieur du réservoir de décoloration (3), les colorants présents dans le liquide de lavage pouvant être décomposés par les radicaux libres, et le moyen d'activation comportant un ensemble d'électrodes (7) comprenant une anode (8) et une cathode (9).

2. Machine à laver (1) selon la revendication 1, **caractérisée en ce que** l'anode (8) est une électrode en diamant dopé au bore.

3. Machine à laver (1) selon la revendication 1 ou 2, **caractérisée en ce que** la surface active de l'anode (8) est comprise entre 1 et 500 cm², de préférence entre 2 et 100 cm².

4. Machine à laver (1) selon la revendication 1, **caractérisée en ce que** le moyen d'activation comprend en outre une source de rayonnement UV (6).

5. Machine à laver (1) selon la revendication 4, **caractérisée en ce qu'**une lampe à quartz ou une diode électroluminescente UV est utilisée comme source de rayonnement UV (6).

6. Machine à laver (1) selon la revendication 4 ou 5, **caractérisée en ce que** la source de rayonnement UV (6) émet un rayonnement UV dans une plage de longueurs d'onde comprise entre 100 et 400 nm, de préférence entre 250 et 400 nm.

7. Machine à laver (1) selon l'une des revendications 1 à 6, **caractérisée en ce qu'**au moins une pompe est prévue, laquelle pompe le liquide de lavage de la chambre de lavage (2) vers le réservoir de décoloration (3) et/ou hors de celui-ci.

8. Machine à laver (1) selon l'une des revendications 1 à 7, **caractérisée en ce que** la durée du processus de formation de radicaux libres est réglable.

9. Machine à laver (1) selon la revendication 8, **caractérisée en ce qu'**un capteur de température est prévu, grâce auquel la température du liquide de lavage peut être détectée, et **en ce que** la mise en œuvre du processus de formation de radicaux libres est couplée à l'atteinte d'une certaine température du liquide de lavage.

10. Machine à laver (1) selon l'une des revendications 1 à 9, **caractérisée en ce que** le réservoir de décoloration (3) est installé à demeure dans un carter de la machine à laver (1).

11. Machine à laver (1) selon l'une des revendications 1 à 9, **caractérisée en ce que** le réservoir de décoloration (3) est réalisé sous la forme d'un module séparé, de préférence alimenté par une batterie.

12. Procédé de lavage de textiles dans une machine à laver à l'aide d'une machine à laver selon l'une des revendications 1 à 11, comprenant les étapes :
- de chargement des textiles à laver dans la chambre de lavage (2) de la machine à laver (1) ;
- de démarrage d'un cycle de lavage ;
- d'introduction du liquide de lavage provenant de la chambre de lavage (2) dans le réservoir de décoloration (3) ;
- de mise en œuvre d'un processus de formation de radicaux libres dans le liquide de lavage dans le réservoir de décoloration (3) ;
- de décomposition des colorants présents dans le liquide de lavage par les radicaux libres ;
- d'acheminement du liquide de lavage traité du réservoir de décoloration (3) vers la chambre de lavage (2).

13. Procédé selon la revendication 12, **caractérisé en ce que** le liquide de lavage a une température comprise entre 10 et 100 °C, de préférence entre 20 et 60 °C.
